# EUROPEAN PATENT SPECIFICATION

(11) **EP 3 316 177 B1**
(45) Date of publication and mention of the grant of the patent: **03.02.2021**
(21) Application number: 17197854.7
(22) Date of filing: 23.10.2017
(51) Int. Cl.: G06F 21/75, G06K 19/073

(54) **ATTACK PREVENTION METHOD, APPARATUS AND CHIP FOR CIPHER ENGINE**
ANGRIFFSVERHINDERUNGSVERFAHREN, VORRICHTUNG UND CHIP FÜR CHIFFRIERMASCHINE
PROCÉDÉ DE PRÉVENTION D'ATTAQUES, APPAREIL ET PUCE POUR MOTEUR DE CHIFFREMENT

(30) Priority: 25.10.2016 CN 201610939740
(43) Date of publication of application: 02.05.2018
(73) Proprietor: HUAWEI TECHNOLOGIES CO., LTD., Shenzhen, Guangdong 518129 (CN)
(72) Inventor: WANG, Bo, Shenzhen, Guangdong 518129 (CN); LU, Jiayin, Shenzhen, Guangdong 518129 (CN); LIU, Yu, Shenzhen, Guangdong 518129 (CN)
(74) Representative: Pfenning, Meinig & Partner mbB

(56) References cited:
- US-A1- 2003 219 126
- US-B1- 6 419 159

## Description

### TECHNICAL FIELD

The present invention relates to the field of computer technologies, and in particular, to an attack prevention method and an attack prevention chip.

### BACKGROUND

A current chip, such as a mobile phone chip, a smart card, an encrypted memory card, a chip of the Internet of Things, a router chip, and a set-top box chip, is encapsulated by using a flip chip or another unique encapsulation technology, or is designed by using a high technology such as a 16 nanometer (nm for short) technology. A security system of the chip is only a small part of the chip, and is usually disposed on an intermediate layer at which cabling is performed. All the foregoing features significantly increase difficulty for an attacker in launching an intrusion attack (such as a profile attack) on all types of chips such as the mobile phone chip. Therefore, the attacker begins to try other available attack methods. A method in which a side channel attack is used to crack a key has become a most effective and popular method used by the attacker to crack a cipher engine. Various chips such as the mobile phone chip leak, through a side channel, power consumption information related to a chip key in a running process, and the power consumption information is closely related to the key. Therefore, the attacker has a chance to crack the chip key by using the power consumption information, and the attack method features low costs and a high success rate.

Therefore, prevention of a side channel attack has become an important attack prevention requirement of the security system. Currently, for the chips, because of limitation such as overall power consumption and overall costs of the chips, a technology in which multiple attack prevention algorithms are added in a cipher engine to defend against the side channel attack is widely used. However, an increasing computing capability is accompanied by an increasingly powerful side channel attack algorithm, and an attack prevention algorithm always lags behind the attack algorithm. Therefore, a design in which an attack prevention algorithm is used cannot defend against a new side channel attack algorithm in time. In the prior art, a security system key may be cracked by using the new side channel attack algorithm, and consequently, the chip in the prior art is not secure.

In US 6,419,159 B 1 an integrated circuit (IC) device has a processor and a memory. The IC device is designed to protect a secret, which may be in the form of data stored in the memory (e.g., cryptographic key, a name, confidential data) or special instructions executed by the processor (e.g., confidential instructions). Normal operation of the IC device results in power fluctuations that are externally measurable on the voltage and ground lines. The IC device is equipped with Mower analysis protection circuitry that randomly varies the power fluctuations. In one implementation, the power analysis protection circuitry includes multiple current sinks coupled between the voltage line and the ground line and a random state generator to randomly turn on and off individual ones of the current sinks. The combination of activated current sinks introduces a new set of power fluctuations that have a different frequency, thereby masking the normal power fluctuations.

In US 2003/219126 A1 a method for scrambling current consumption of an integrated circuit, at least during execution of a confidential operation by the integrated circuit that includes reading confidential data stored therein and/or the calculation of an encryption code is provided. The charge pump is activated to generate current consumption fluctuations on the electrical power supply line of the integrated circuit, at an intensity great enough to mask the current consumption variations associated with the execution of the confidential operation.

### SUMMARY

According to the present application, the above objects are solved by the claimed matter according to the independent claims. Embodiments of the present invention provide an attack prevention method, and an attack prevention chip, so as to prevent a side channel attack on a chip, and improve security of the chip. To resolve the foregoing technical problem, the embodiments of the present invention provide the following technical solutions:
According to a first aspect, an embodiment of the present invention provides an attack prevention method for a cipher engine, including: obtaining a first running start condition configured for a cipher engine, where the cipher engine is disposed on a chip; configuring, according to the first running start condition, a second running start condition for a scrambling module disposed on the chip, where the second running start condition is used to enable the scrambling module to enter an operating state of generating power consumption and an electromagnetic wave in a process of starting, according to the first running start condition, the cipher engine to perform data encryption/decryption processing; controlling the scrambling module to start to run when the second running start condition is met, where the scrambling module generates the power consumption and the electromagnetic wave during running; and controlling the cipher engine to start when the first running start condition is met, so that the cipher engine starts to perform data encryption/decryption processing; wherein the scrambling module is an idle module, the idle module being a module that is disposed on the chip and the idle module being in an idle state in the process of performing data encryption/decryption processing by the cipher engine; and wherein the idle module is used as the scrambling module to scramble the power consumption and the electromagnetic wave of the cipher engine.

In this embodiment of the present invention, a cipher engine and a scrambling module are disposed on a chip. A first running start condition configured for the cipher engine is first obtained, and then a second running start condition may be configured, according to the first running start condition, for the scrambling module disposed on the chip. The second running start condition is used to enable the scrambling module to enter an operating state of generating power consumption and an electromagnetic wave in a process of starting, according to the first running start condition, the cipher engine to perform data encryption/decryption processing. The scrambling module is controlled to start to run when the second running start condition is met, where the scrambling module generates the power consumption and the electromagnetic wave during running; and the cipher engine is controlled to start when the first running start condition is met, so that the cipher engine starts to perform data encryption/decryption processing. Therefore, the scrambling module in this embodiment of the present invention can generate power consumption and an electromagnetic wave in the process of performing data encryption/decryption processing by the cipher engine, so that the scrambling module can mask power consumption and an electromagnetic wave generated by the cipher engine inside the chip. In this way, the cipher engine inside the chip cannot be correctly located during a side channel attack, and a possibility that the chip is attacked by using a side channel is eliminated, so as to prevent a side channel attack on the chip, and improve security of the chip.

With reference to the first aspect, in a first possible implementation of the first aspect, the first running start condition includes a first running start time; and the configuring, according to the first running start condition, a second running start condition for a scrambling module disposed on the chip includes: obtaining, according to the first running start time of the cipher engine and a preset start time interval, a second running start time of the scrambling module disposed on the chip. An example in which a running start condition is specifically a running start time is used for description. A start time interval is pre-configured, and then the second running start time of the scrambling module disposed on the chip is obtained according to the first running start time of the cipher engine and the preset start time interval. The second running start time may be configured with reference to the first running start time and the start time interval. The first running start time is first determined on a timeline, and the second running start time may be determined on the timeline by means of sliding based on a start time interval. In this way, the start time of the scrambling module is determined by configuring the start time, so that the scrambling module can start to operate according to the second running start time.

With reference to the first possible implementation of the first aspect, in a second possible implementation of the first aspect, the obtaining, according to the running start time of the cipher engine and a preset start time interval, a running start time of the scrambling module disposed on the chip includes: when a value of the start time interval is a time value less than 0, using a time value that is obtained by advancing the first running start time by the start time interval as the second running start time; or when a value of the start time interval is a time value greater than 0, using a time value that is obtained by delaying the first running start time by the start time interval as the second running start time; or when a value of the start time interval is 0, using the first running start time as the second running start time. Specifically, the start time interval may be set to a time value such as a positive value, a negative value, or zero, so that specific start manners for the scrambling module are determined when there are multiple start time intervals, and the scrambling module can start to operate according to the second running start time.

With reference to the second possible implementation of the first aspect, in a third possible implementation of the first aspect, the controlling the scrambling module to start to run when the second running start condition is met includes: controlling the scrambling module disposed on the chip to start to run before the cipher engine starts data encryption/decryption processing; or controlling the scrambling module disposed on the chip to start to run in a process of performing data encryption/decryption processing by the cipher engine; or controlling the scrambling module disposed on the chip to start to run when the cipher engine starts data encryption/decryption processing. Specifically, the scrambling module may start to run before the cipher engine starts to operate, and normal operation of the cipher engine may be more effectively scrambled and masked by using the scrambling module that first runs. Alternatively, the scrambling module may start to run after the cipher engine has started to operate, and when running, the scrambling module can scramble and mask the normal operation of the cipher engine. Alternatively, the scrambling module and the cipher engine may start to operate at a same time. Because the scrambling module and the cipher engine simultaneously run, for a side channel attack, power consumption and an electromagnetic wave cannot be correctly analyzed to obtain a power consumption track of the cipher engine. This significantly increases attack difficulty for an attacker, and provides an effective method for defending against the side channel attack.

With reference to any one of the first aspect, or the first to the third possible implementations of the first aspect, in a fourth possible implementation of the first aspect, after the controlling the cipher engine to start when the first running start condition is met, the method further includes: controlling the scrambling module to stop running after the cipher engine completes data encryption/decryption processing. The cipher engine starts to operate normally after being triggered by the first running start condition, and the scrambling module is controlled to stop running after the cipher engine completes data encryption/decryption processing, so that power consumption of an entire system is reduced. In actual application, after normal encryption/decryption is complete, the scrambling module used for power consumption scrambling may be disabled or may not be disabled. Preferably, disabling the scrambling module may reduce system power consumption.

With reference to any one of the first aspect, or the first to the third possible implementations of the first aspect, in a fifth possible implementation of the first aspect, after the controlling the cipher engine to start when the first running start condition is met, the method further includes: controlling the scrambling module to stop running or controlling the scrambling module to reduce power consumption when a disabling time interval after the cipher engine starts to perform data encryption/decryption processing expires. The cipher engine starts to operate normally after being triggered by the first running start condition, timing is performed when the cipher engine starts to perform data encryption/decryption processing, and the scrambling module is controlled to stop running or the scrambling module is controlled to reduce power consumption when the disabling time interval expires, so as to reduce power consumption of an entire system. For example, the disabling time interval may be set according to a specific application scenario, timing is performed when the cipher engine starts to perform data encryption/decryption processing, and when the disabling time interval expires, it indicates that a condition for disabling the scrambling module is met, and the scrambling module may be disabled.

With reference to any one of the first aspect, or the first to the third possible implementations of the first aspect, in a sixth possible implementation of the first aspect, the scrambling module further includes a redundancy module that is disposed on the chip and that performs power consumption scrambling and electromagnetic wave scrambling on the cipher engine, or an idle logic unit or a redundancy logic unit that is inside the cipher engine in the process of performing data encryption/decryption processing by the cipher engine. The scrambling module provided in this embodiment of the present invention may be disposed outside the cipher engine, or may be disposed inside the cipher engine. Power consumption interference and electromagnetic wave interference may be performed in various implementations of the scrambling module in the process of performing data encryption/decryption processing by the cipher engine.

According to a second aspect, an embodiment of the present invention further provides an attack prevention apparatus for a cipher engine, including: an obtaining module, configured to obtain a first running start condition configured for a cipher engine, where the cipher engine is disposed on a chip; a condition configuration module, configured to configure, according to the first running start condition, a second running start condition for a scrambling module disposed on the chip, where the second running start condition is used to enable the scrambling module to enter an operating state of generating power consumption and an electromagnetic wave in a process of starting, according to the first running start condition, the cipher engine to perform data encryption/decryption processing; and a control module, configured to: control the scrambling module to start to run when the second running start condition is met, where the scrambling module generates the power consumption and the electromagnetic wave during running, and control the cipher engine to start when the first running start condition is met, so that the cipher engine starts to perform data encryption/decryption processing;wherein the scrambling module is an idle module, the idle module being a module that is disposed on the chip and the idle module being in an idle state in the process of performing data encryption/decryption processing by the cipher engine; and wherein the idle module is used as the scrambling module to scramble the power consumption and the electromagnetic wave of the cipher engine.

In this embodiment of the present invention, a cipher engine and a scrambling module are disposed on a chip. A first running start condition configured for the cipher engine is first obtained, and then a second running start condition may be configured, according to the first running start condition, for the scrambling module disposed on the chip. The second running start condition is used to enable the scrambling module to enter an operating state of generating power consumption and an electromagnetic wave in a process of starting, according to the first running start condition, the cipher engine to perform data encryption/decryption processing. The scrambling module is controlled to start to run when the second running start condition is met, where the scrambling module generates the power consumption and the electromagnetic wave during running; and the cipher engine is controlled to start when the first running start condition is met, so that the cipher engine starts to perform data encryption/decryption processing. Therefore, the scrambling module in this embodiment of the present invention can generate power consumption and an electromagnetic wave in the process of performing data encryption/decryption processing by the cipher engine, so that the scrambling module can mask power consumption and an electromagnetic wave generated by the cipher engine inside the chip. In this way, the cipher engine inside the chip cannot be correctly located during a side channel attack, and a possibility that the chip is attacked by using a side channel is eliminated, so as to prevent a side channel attack on the chip, and improve security of the chip.

With reference to the second aspect, in a first possible implementation of the second aspect, the first running start condition includes: a first running start time; and the condition configuration module is specifically configured to obtain, according to the first running start time of the cipher engine and a preset start time interval, a second running start time of the scrambling module disposed on the chip. An example in which a running start condition is specifically a running start time is used for description. A start time interval is pre-configured, and then the second running start time of the scrambling module disposed on the chip is obtained according to the first running start time of the cipher engine and the preset start time interval. The second running start time may be configured with reference to the first running start time and the start time interval. The first running start time is first determined on a timeline, and the second running start time may be determined on the timeline by means of sliding based on a start time interval. In this way, the start time of the scrambling module is determined by configuring the start time, so that the scrambling module can start to operate according to the second running start time.

With reference to the first possible implementation of the second aspect, in a second possible implementation of the second aspect, the condition configuration module is specifically a first time configuration unit, or a second time configuration unit, or a third time configuration unit. The first time configuration unit is configured to: when a value of the start time interval is a time value less than 0, use a time value that is obtained by advancing the first running start time by the start time interval as the second running start time; or the second time configuration unit is configured to: when a value of the start time interval is a time value greater than 0, use a time value that is obtained by delaying the first running start time by the start time interval as the second running start time; or the third time configuration unit is configured to: when a value of the start time interval is 0, use the first running start time as the second running start time. Specifically, the start time interval may be set to a time value such as a positive value, a negative value, or zero, so that specific start manners for the scrambling module are determined when there are multiple start time intervals, and the scrambling module can start to operate according to the second running start time.

With reference to the second possible implementation of the second aspect, in a third possible implementation of the second aspect, the control module is specifically a first module triggering unit, or a second module triggering unit, or a third module triggering unit. The first module triggering unit is specifically configured to control the scrambling module disposed on the chip to start to run before the cipher engine starts data encryption/decryption processing; or the second module triggering unit is specifically configured to control the scrambling module disposed on the chip to start to run in a process of performing data encryption/decryption processing by the cipher engine; or the third module triggering unit is specifically configured to control the scrambling module disposed on the chip to start to run when the cipher engine starts data encryption/decryption processing. Specifically, the scrambling module may start to run before the cipher engine starts to operate, and normal operation of the cipher engine may be more effectively scrambled and masked by using the scrambling module that first runs. Alternatively, the scrambling module may start to run after the cipher engine has started to operate, and when running, the scrambling module can scramble and mask the normal operation of the cipher engine. Alternatively, the scrambling module and the cipher engine may start to operate at a same time. Because the scrambling module and the cipher engine simultaneously run, for a side channel attack, power consumption and an electromagnetic wave cannot be correctly analyzed to obtain a power consumption track of the cipher engine. This significantly increases attack difficulty for an attacker, and provides an effective method for defending against the side channel attack.

With reference to any one of the second aspect, or the first to the third possible implementations of the second aspect, in a fourth possible implementation of the second aspect, the control module is further configured to: after controlling the cipher engine to start when the first running start condition is met, control the scrambling module to stop running after the cipher engine completes data encryption/decryption processing. The cipher engine starts to operate normally after being triggered by the first running start condition, and the scrambling module is controlled to stop running after the cipher engine completes data encryption/decryption processing, so that power consumption of an entire system is reduced. In actual application, after normal encryption/decryption is complete, the scrambling module used for power consumption scrambling may be disabled or may not be disabled. Preferably, disabling the scrambling module may reduce system power consumption.

With reference to any one of the second aspect, or the first to the third possible implementations of the second aspect, in a fifth possible implementation of the second aspect, the control module is further configured to: after controlling the cipher engine to start when the first running start condition is met, control the scrambling module to stop running or control the scrambling module to reduce power consumption when a disabling time interval after the cipher engine starts to perform data encryption/decryption processing expires. The cipher engine starts to operate normally after being triggered by the first running start condition, timing is performed when the cipher engine starts to perform data encryption/decryption processing, and the scrambling module is controlled to stop running or the scrambling module is controlled to reduce power consumption when the disabling time interval expires, so as to reduce power consumption of an entire system. For example, the disabling time interval may be set according to a specific application scenario, timing is performed when the cipher engine starts to perform data encryption/decryption processing, and when the disabling time interval expires, it indicates that a condition for disabling the scrambling module is met, and the scrambling module may be disabled.

With reference to any one of the second aspect, or the first to the third possible implementations of the second aspect, in a sixth possible implementation of the second aspect, the scrambling module further includes a redundancy module that is disposed on the chip and that performs power consumption scrambling and electromagnetic wave scrambling on the cipher engine, or an idle logic unit or a redundancy logic unit that is inside the cipher engine in the process of performing data encryption/decryption processing by the cipher engine. The scrambling module provided in this embodiment of the present invention may be disposed outside the cipher engine, or may be disposed inside the cipher engine. Power consumption interference and electromagnetic wave interference may be performed in various implementations of the scrambling module in the process of performing data encryption/decryption processing by the cipher engine.

According to a third aspect, an embodiment of the present invention further provides an attack prevention chip, and the chip includes a cipher engine, a scrambling module, and an attack prevention apparatus for a cipher engine. The cipher engine and the scrambling module respectively establish a communications connection to the attack prevention apparatus for a cipher engine; and the attack prevention apparatus for a cipher engine is an apparatus according to any one of the implementations of the second aspect.

In this embodiment of the present invention, a cipher engine and a scrambling module are disposed on a chip. A first running start condition configured for the cipher engine is first obtained, and then a second running start condition may be configured, according to the first running start condition, for the scrambling module disposed on the chip. The second running start condition is used to enable the scrambling module to enter an operating state of generating power consumption and an electromagnetic wave in a process of starting, according to the first running start condition, the cipher engine to perform data encryption/decryption processing. The scrambling module is controlled to start to run when the second running start condition is met, where the scrambling module generates the power consumption and the electromagnetic wave during running; and the cipher engine is controlled to start when the first running start condition is met, so that the cipher engine starts to perform data encryption/decryption processing. Therefore, the scrambling module in this embodiment of the present invention can generate power consumption and an electromagnetic wave in the process of performing data encryption/decryption processing by the cipher engine, so that the scrambling module can mask power consumption and an electromagnetic wave generated by the cipher engine inside the chip. In this way, the cipher engine inside the chip cannot be correctly located during a side channel attack, and a possibility that the chip is attacked by using a side channel is eliminated, so as to prevent a side channel attack on the chip, and improve security of the chip.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons skilled in the art may still derive other drawings from these accompanying drawings.
FIG. 1 is a schematic block flowchart of an attack prevention method for a cipher engine according to an embodiment of the present invention;
FIG. 2 is a schematic diagram of a hardware structure of a chip according to an embodiment of the present invention;
FIG. 3 is a schematic diagram of a scenario in which a scrambling module masks power consumption and an electromagnetic wave that are generated by a cipher engine according to an embodiment of the present invention;
FIG. 4 is a schematic structural diagram of composition of an attack prevention apparatus for a cipher engine according to an embodiment of the present invention; and
FIG. 5 is a schematic structural diagram of composition of an attack prevention chip according to an embodiment of the present invention.

### DESCRIPTION OF EMBODIMENTS

Embodiments of the present invention provide an attack prevention method and apparatus for a cipher engine, and an attack prevention chip, so as to prevent a side channel attack on a chip, and improve security of the chip.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by persons skilled in the art based on the embodiments of the present invention shall fall within the protection scope of the present invention.

In the specification, claims, and accompanying drawings of the present invention, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in the embodiments of the present invention. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

Considering a power consumption-based attack feature of a side channel attack, the present invention provides an implementation solution in which operating power consumption of a cipher engine is disturbed and hidden. The solution is easy to implement, and prevents the attacker from correctly analyzing or obtaining a power consumption track of the cipher engine. This significantly increases attack difficulty for an attacker, and provides an effective method for defending against the side channel attack.

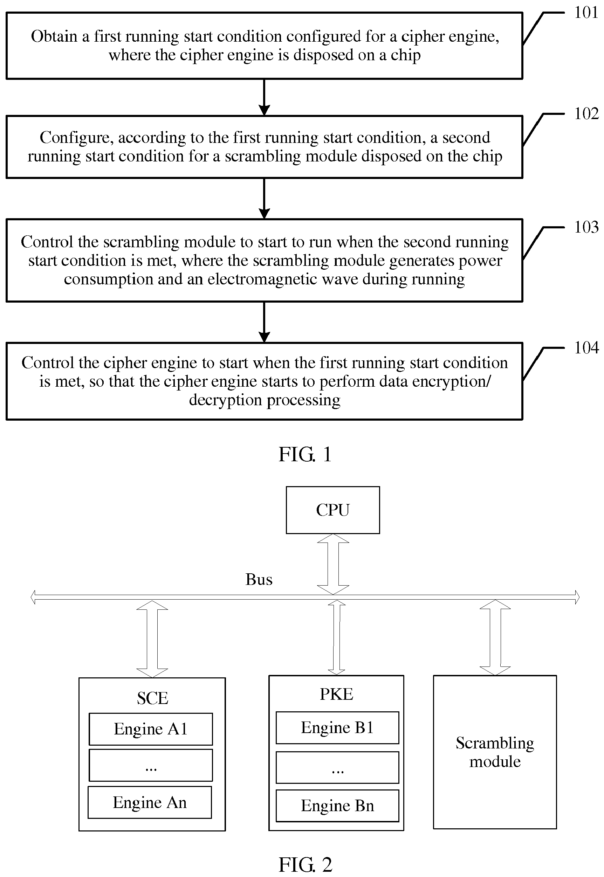

Detailed description is separately provided below. An embodiment of the present invention is applied to an inside of a chip. Power consumption and an electromagnetic wave that are generated by a cipher engine disposed inside the chip may be effectively masked by controlling running of a scrambling module disposed inside the chip. Referring to FIG. 1, an attack prevention method for a cipher engine provided in this embodiment of the present invention may include the following steps.

101. Obtain a first running start condition configured for a cipher engine, where the cipher engine is disposed on a chip.

In this embodiment of the present invention, the cipher engine is disposed on the chip. The chip is not limited to a mobile phone chip, a smart card, an encrypted memory card, a chip of the Internet of Things, a router chip, a set-top box chip, an automobile chip, an unmanned aerial vehicle chip, and another chip. The cipher engine disposed on the chip inevitably generates power consumption and an electromagnetic wave during normal operation, and consequently, an attacker can launch a side channel attack on the cipher engine disposed inside the chip. To resolve this problem, in addition to the cipher engine, a scrambling module is further disposed inside the chip in this embodiment of the present invention. The scrambling module can mask normal operation of the cipher engine, so that the attacker cannot identify the cipher engine inside the chip by using the power consumption and the electromagnetic wave. For details, refer to description in a subsequent embodiment. Preferably, the scrambling module and the cipher engine have similar power consumption, or the scrambling module has higher power consumption. Therefore, the normal operation of the cipher engine may be masked by running the scrambling module, so as to effectively defend against the side channel attack.

In this embodiment of the present invention, the cipher engine may be one or more encryption/decryption modules, or a part or all of encryption/decryption logic, and may execute some or all of the following functions: encryption/decryption, signature authentication, and key generation. The running of the cipher engine may be triggered by using the running start condition. To distinguish between running start conditions of different devices, the running start condition configured for the cipher engine is defined as the "first running start condition" in this embodiment of the present invention. The first running start condition may be but is not limited to a first running start time, that is, triggering of a clock is used as the running start condition of the cipher engine; the first running start condition may be a triggering instruction configured for the cipher engine, where the triggering instruction may be an instruction in a specific format or with a specific field; or the first running start condition may be a specific signal configured for the cipher engine, and the cipher engine may be started when it is detected that the specific signal is generated. This is not limited herein.

102. Configure, according to the first running start condition, a second running start condition for a scrambling module disposed on the chip.

The second running start condition is used to enable the scrambling module to enter an operating state of generating the power consumption and the electromagnetic wave in a process of starting, according to the first running start condition, the cipher engine to perform data encryption/decryption processing.

In this embodiment of the present invention, in addition to the cipher engine, a scrambling module is disposed on the chip. This scrambling module is a module that is disposed inside the chip and that can generate power consumption and an electromagnetic wave. The scrambling module may be implemented in multiple manners. In an application scenario that can be implemented, the scrambling module may include an idle module that is disposed on the chip and that is in an idle state in a process of performing data encryption/decryption processing by the cipher engine, or a redundancy module that is disposed on the chip and that performs power consumption scrambling and electromagnetic wave scrambling on the cipher engine, or an idle logic unit or a redundancy logic unit that is inside the cipher engine in a process of performing data encryption/decryption processing by the cipher engine.

An example for description is as follows: The scrambling module may be an idle module or a redundancy module disposed on the chip. The idle module is a module that is inside the chip and that is in an idle state relative to the cipher engine. The idle module may be implemented by a module that has been disposed on the chip and that does not operate when the cipher engine operates. For example, the idle module is a true random number generator (True Random Number Generator, TRNG) that is in an idle state in the process of performing data encryption/decryption processing by the cipher engine. The TRNG is disposed on the chip, the TRNG may perform a true random number calculation, but the TRNG does not operate in the process of performing data encryption/decryption processing by the cipher engine. Therefore, the TRNG may be used as an idle module to scramble the power consumption and the electromagnetic wave of the cipher engine. Alternatively, the idle module may be a one time programmer (OTP), a memory encryption and decryption (MED) module, a sensor (sensor), a hash calculation (HASH) module, or the like that is in an idle state in the process of performing data encryption/decryption processing by the cipher engine. These modules are also disposed on the chip, but do not operate when the cipher engine on the chip is performing data encryption/decryption processing. Therefore, each of the modules may be used as the scrambling module in this embodiment of the present invention to scramble the power consumption and the electromagnetic wave of the cipher engine. The redundancy module is a module that is disposed inside the chip and that scrambles the power consumption and the electromagnetic wave of the cipher engine, except for a normal function implemented by the chip. For example, the redundancy module is an additional module that is disposed to scramble the power consumption and the electromagnetic wave of the cipher engine in this embodiment of the present invention and that has a function different from an original function of the chip. The idle module and the redundancy module are disposed on the chip. The idle module and the redundancy module need to be connected only to a CPU on the chip. The idle module and the redundancy module may be connected to the cipher engine, or may not be connected to the cipher engine. This is not limited herein. The idle module and the redundancy module described above are modules that are disposed on the chip and that are separated from the cipher engine. The scrambling module provided in this embodiment of the present invention may be disposed outside the cipher engine, or may be disposed inside the cipher engine. This is not limited herein. For example, the scrambling module may be an idle logic unit or a redundancy logic unit disposed inside the cipher engine in the process of performing data encryption/decryption processing by the cipher engine. The idle logic unit or the redundancy logic unit may be connected to an encryption/decryption processing unit of the cipher engine by using a circuit, so that the cipher processing unit can generate the power consumption and the electromagnetic wave when performing encryption/decryption processing on data. For example, for the cipher engine, a function unit a and a function unit b are disposed to perform encryption/decryption processing on data. For the cipher engine in different application scenarios, specific implementations of the function unit a and the function unit b may be different. Only an example is described herein. In addition to the function unit a and the function unit b, an idle logic unit or a redundancy logic unit is disposed inside the cipher engine. The idle logic unit or the redundancy logic unit may be used as the scrambling module provided in the foregoing embodiment of the present invention, so as to scramble the power consumption and the electromagnetic wave of the cipher engine.

In this embodiment of the present invention, after the first running start condition configured for the cipher engine is obtained, the second running start condition is configured for the scrambling module according to the first running start condition. The second running start condition configured for the scrambling module may be configured in multiple manners, so that the configured second running start condition may be used to enable the scrambling module to enter an operating state of generating the power consumption and the electromagnetic wave in the process of starting, according to the first running start condition, the cipher engine to perform data encryption/decryption processing. The second running start condition may be a running start time, a triggering instruction, a specific signal, or the like that is configured for the scrambling module. For example, the second running start condition may be a triggering instruction, for example, an instruction in a specific format or with a specific field; or the second running start condition is a specific signal configured for the scrambling module. A specific implementation is not limited.

In some embodiments of the present invention, an example in which a running start condition is specifically a running start time is used for description. That is, the first running start condition configured for the cipher engine includes a first running start time, and the second running start condition configured for the scrambling module includes a second running start time. The second running start time may be implemented in the following manner. Step 102 in which the second running start condition is configured, according to the first running start condition, for the scrambling module disposed on the chip includes the following steps.

A1. Obtain, according to the first running start time of the cipher engine and a preset start time interval, the second running start time of the scrambling module disposed on the chip.

The start time interval is pre-configured, and then the second running start time of the scrambling module disposed on the chip is obtained according to the first running start time of the cipher engine and the preset start time interval. The second running start time may be configured with reference to the first running start time and the start time interval. The first running start time is first determined on a timeline, and the second running start time may be determined on the timeline by means of sliding based on a start time interval.

In some embodiments of the present invention, step A1 in which the running start time of the scrambling module on the chip is obtained according to the running start time of the cipher engine and the preset start time interval includes:
A11. When a value of the start time interval is a time value less than 0, use a time value that is obtained by advancing the first running start time by the start time interval as the second running start time; or
A12. When a value of the start time interval is a time value greater than 0, use a time value that is obtained by delaying the first running start time by the start time interval as the second running start time; or
A13. When a value of the start time interval is 0, use the first running start time as the second running start time.

Specifically, the start time interval may be set to a time value such as a positive value, a negative value, or zero. An example for description is as follows: The first running start time is first determined on a timeline, and the second running start time may be determined on the timeline by means of sliding based on a start time interval. For example, when the value of the start time interval is a time value less than 0, the second running start time may be determined on the timeline by sliding leftward from the first running start time, and the second running start time is earlier than the first running start time. For another example, when the value of the start time interval is a time value greater than 0, the second running start time may be determined on the timeline by sliding rightward from the first running start time, and the second running start time is later than the first running start time. For still another example, when the value of the start time interval is 0, the first running start time on the timeline is equal to the second running start time, that is, the first running start time may be used as the second running start time. It may be understood that the second running start time of the scrambling module may be determined with reference to an application scenario. This is not limited herein.

In this embodiment of the present invention, after the second running start condition is configured for the scrambling module, whether the first running start condition and the second running start condition are met needs to be detected in real time. If the first running start condition is met, a subsequent step 104 is performed, and if the second running start condition is met, a subsequent step 103 is performed. In actual application, step 103 and step 104 may be in multiple time sequence relationships. For example, step 103 may be performed before step 104, or step 104 may be performed before step 103, or step 103 and step 104 may be performed at a same time. A specific implementation is not limited. In FIG. 1, an example in which step 103 is performed before step 104 is used for description.

103. Control the scrambling module to start to run when the second running start condition is met, where the scrambling module generates power consumption and an electromagnetic wave during running.

104. Control the cipher engine to start when the first running start condition is met, so that the cipher engine starts to perform data encryption/decryption processing.

In this embodiment of the present invention, after the first running start condition and the second running start condition are obtained, whether the first running start condition and the second running start condition are met needs to be detected in real time. When a running start condition is met, a module triggered by the condition is controlled to start to run. For example, when the second running start condition is met, the scrambling module is controlled to start to run, and when the first running start condition is met, the cipher engine is controlled to start. Normal operation of the cipher engine is performing data encryption/decryption processing, and the scrambling module generates the power consumption and the electromagnetic wave during running, so that the normal operation of the cipher engine is masked, and a side channel attack cannot succeed.

In some embodiments of the present invention, step 103 in which the scrambling module is controlled to start to run when the second running start condition is met may be specifically:
B1. Control the scrambling module disposed on the chip to start to run before the cipher engine starts data encryption/decryption processing; or
B2. Control the scrambling module disposed on the chip to start to run in a process of performing data encryption/decryption processing by the cipher engine; or
B3. Control the scrambling module disposed on the chip to start to run when the cipher engine starts data encryption/decryption processing.

In a scenario in which the second running start condition is implemented by performing the foregoing step A11, specifically, step B1 may be performed. That is, the scrambling module starts to run before the cipher engine starts to operate, and the normal operation of the cipher engine may be more effectively scrambled and masked by using the scrambling module that first runs. In a scenario in which the second running start condition is implemented by performing the foregoing step A12, specifically, step B2 may be performed. That is, the scrambling module starts to run after the cipher engine has started to operate, and the normal operation of the cipher engine may be scrambled and masked when the scrambling module runs. In a scenario in which the second running start condition is implemented by performing the foregoing step A13, specifically, step B3 may be performed. That is, the scrambling module and the cipher engine start to operate at a same time. Because the scrambling module and the cipher engine simultaneously run, for a side channel attack, power consumption and an electromagnetic wave cannot be correctly analyzed to obtain a power consumption track of the cipher engine. This significantly increases attack difficulty for the attacker, and provides an effective method for defending against the side channel attack.

In some embodiments of the present invention, in step 104, after the cipher engine is controlled to start when the first running start condition is met, the method provided in this embodiment of the present invention may further include the following step.

C1. Control the scrambling module to stop running after the cipher engine completes data encryption/decryption processing.

The cipher engine starts to operate normally after being triggered by the first running start condition, and the scrambling module is controlled to stop running after the cipher engine completes data encryption/decryption processing, so that power consumption of an entire system is reduced. In actual application, after normal encryption/decryption is complete, the scrambling module (such as redundancy logic or another unused module in a circuit) used for power consumption scrambling may be disabled or may not be disabled. Preferably, disabling the scrambling module may reduce system power consumption.

In some other embodiments of the present invention, in step 104, after the cipher engine is controlled to start when the first running start condition is met, the method provided in this embodiment of the present invention may further include the following step.

D1. Control the scrambling module to stop running or control the scrambling module to reduce power consumption when a disabling time interval after the cipher engine starts to perform data encryption/decryption processing expires.

The cipher engine starts to operate normally after being triggered by the first running start condition, timing is performed when the cipher engine starts to perform data encryption/decryption processing, and the scrambling module is controlled to stop running or the scrambling module is controlled to reduce power consumption when the disabling time interval expires, so as to reduce power consumption of an entire system. For example, the disabling time interval may be set according to a specific application scenario, timing is performed when the cipher engine starts to perform data encryption/decryption processing, and when the disabling time interval expires, it indicates that a condition for disabling the scrambling module is met, and the scrambling module may be disabled.

It can be learned from the example used for description in the foregoing embodiment of the present invention that, a cipher engine and a scrambling module are disposed on a chip. A first running start condition configured for the cipher engine is first obtained, and then a second running start condition may be configured, according to the first running start condition, for the scrambling module disposed on the chip. The second running start condition is used to enable the scrambling module to enter an operating state of generating power consumption and an electromagnetic wave in a process of starting, according to the first running start condition, the cipher engine to perform data encryption/decryption processing. The scrambling module is controlled to start to run when the second running start condition is met, where the scrambling module generates the power consumption and the electromagnetic wave during running; and the cipher engine is controlled to start when the first running start condition is met, so that the cipher engine starts to perform data encryption/decryption processing. Therefore, the scrambling module in this embodiment of the present invention can generate power consumption and an electromagnetic wave in the process of performing data encryption/decryption processing by the cipher engine, so that the scrambling module can mask power consumption and an electromagnetic wave generated by the cipher engine inside the chip. In this way, the cipher engine inside the chip cannot be correctly located during a side channel attack, and a possibility that the chip is attacked by using a side channel is eliminated, so as to prevent a side channel attack on the chip, and improve security of the chip.

To better understand and implement the foregoing solutions in this embodiment of the present invention, the following uses a corresponding application scenario as an example for detailed description.

Considering a power consumption-based attack feature of a side channel attack, the present invention provides a method for disturbing and hiding operating power consumption of a cipher engine. The method is easy to implement, and prevents the attacker from correctly analyzing or obtaining a power consumption track of the cipher engine. This significantly increases attack difficulty for an attacker, and provides an effective method for defending against the side channel attack. The power consumption is energy consumption, and is often embodied as current consumption or power consumption. The present invention provides a method for disturbing and hiding operating power consumption of the cipher engine. When the method is used, power consumption information of the cipher engine no longer has a specific regularity and feature, so that the attacker cannot correctly analyze or obtain the power consumption track of the cipher engine. This significantly increases attack difficulty for the attacker, and provides an effective method for defending against the side channel attack. The method has advantages such as ease of implementation and lower difficulty in designing power consumption scrambling and power consumption hide.

Referring to FIG. 2, FIG. 2 is a schematic diagram of a hardware structure of a chip according to an embodiment of the present invention. A cipher engine and a scrambling module are disposed inside the chip. An example of the hardware structure of the chip is described in FIG. 2. In an application scenario of this embodiment of the present invention, the scrambling module is used to scramble and hide the cipher engine. "Scrambling module" is a general term. Any module that can disturb power consumption information generated during a normal operation, and hide or disturb actual operation power consumption is a scrambling module.

An embodiment of hardware composition shown in FIG. 2 mainly includes a central processing unit (English full name: Central Processing Unit, CPU for short), a bus, a cipher engine module, and a scrambling module. The cipher engine may be implemented in multiple manners. For example, a type A is a symmetric encryption engine (Symmetric Encrypt Engine, SCE for short), and a type B is a public key engine (Public Key Engine, PKE for short). The scrambling module is any other module other than the SCE and the PKE. For example, the scrambling module may be a clock scrambling module, a TRNG, an OTP, an MED module, a sensor, a hash calculation module in a system, or may be a module, a logic unit, or the like that is specially configured to perform power consumption scrambling and electromagnetic wave scrambling on the cipher engine. For example, the scrambling module shown in FIG. 2 is any other idle module, any other idle logic unit, or any redundancy module in the system. It should be noted that an example in which the scrambling module is a separate module that is separated from the cipher engine is used for description in FIG. 2. In some embodiments of the present invention, the scrambling module may be disposed inside the cipher engine, because most engines also include scrambling logic, or include idle logic or redundancy logic of a module. All cipher engines in the specification are one or more encryption/decryption modules, or a part or all of encryption/decryption logic, and may execute some or all of the following functions: encryption/decryption, signature authentication, and key generation. A normal operation module of the cipher engine is a module that needs to operate during service running, and an idle module is a module that does not operate normally. When being idle, the scrambling module may always be started to generate scrambled power consumption, so as to interfere with and hide normal operation power consumption of the cipher engine. The scrambling module may run automatically, or may run by means of software configuration. Any manner, such as interfering, hiding, or disturbing, that prevents an attacker from easily learning normal power consumption may be considered as interference.

It should be noted that in this embodiment of the present invention, many modules in a current system may also naturally interfere with power consumption of the cipher engine during running of the cipher engine, but the modules may be shielded or disabled, so that the modules cannot operate and cannot interfere with the power consumption of the cipher engine. However, the scrambling module provided in this embodiment of the present invention mainly refers to a module that cannot be shielded or disabled, and the scrambling module (such as an idle module or a redundancy module) needs to run by means of software configuration or the like. In this embodiment of the present invention, there is a compulsory running cooperation relationship between the scrambling module and the cipher engine, and the scrambling module cannot be disabled by the CPU.

In the following, an example is used to describe a running process of scrambling power consumption of the attack prevention chip in this embodiment of the present invention.
1. Before the cipher engine is run, the scrambling module (such as redundancy logic or another unused module in a circuit) that has power consumption similar to that of the engine or has greater power consumption is first run. Alternatively, the scrambling module may be enabled when the engine operates.
2. Then, the cipher engine that performs normal encryption/decryption is run.
3. The scrambling module may be disabled or may not be disabled after normal encryption/decryption is complete. It is recommended that the scrambling module is disabled, so as to reduce system power consumption. Alternatively, the scrambling module may be disabled before the cipher engine completes encryption/decryption processing, provided that normal running power consumption of the cipher engine can be scrambled. Generally, scrambling logic is disabled after the engine completes running, and in this way, a coverage time of the scrambling logic is longer. Alternatively, an encryption/decryption process of the cipher engine may be externally controlled; when bottom-layer software or a chip is designed, the scrambling module may also be designed to run, so that the scrambling module and the engine may run almost at a same time.

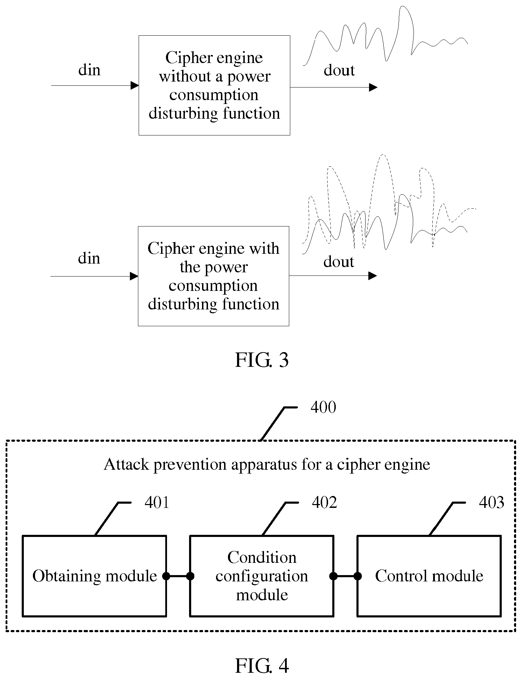

Before a cipher engine is run, logic that has power consumption similar to or higher than that of the engine is first run. Before encryption/decryption or signature authentication needs to be performed on valid data, the CPU first configures and starts a part or all of the scrambling module. In a chip, the scrambling logic may be integrated in one module, or may be distributed in all modules. The CPU configures, starts, and then runs the cipher engine that performs normal encryption/decryption or signature authentication. After normal encryption/decryption is complete, the scrambling module (such as redundancy logic or another unused module in a circuit) that is used for power consumption scrambling may be disabled or may not be disabled. As shown in FIG. 3, din indicates input, and dout indicates output. In the prior art, a cipher engine does not have a power consumption disturbing function, and output power consumption of the cipher engine is indicated by a solid curve in FIG. 3. In an embodiment of the present invention, a cipher engine has the power consumption disturbing function, that is, the cipher engine and a scrambling module are disposed on a chip, output power consumption of the cipher engine is indicated by a solid curve in FIG. 3, and output power consumption of the scrambling module is indicated by a dashed curve in FIG. 3. When the cipher engine with the power consumption disturbing function is used, the solid curve and the dashed curve are superimposed, and the solid curve overlaps with the dashed curve. Therefore, the original power consumption curve (the solid curve in the figure) of the cipher engine is masked by the power consumption curve (the dashed curve in the figure) of the scrambling module, so that power consumption is hidden. In this way, an attacker cannot correctly analyze or obtain a power consumption track of the cipher engine. This significantly increases attack difficulty for the attacker, and provides an effective method for defending against a side channel attack.

In this embodiment of the present invention, power consumption scrambling is performed only when the cipher engine operates, so that power consumption of the entire chip is not excessively high. Specifically, in an aspect, according to this embodiment of the present invention, the cipher engine in a security system may be protected, so that a power consumption feature related to a key is not leaked during running. The method is cost effective and easy to use, and has a significant power consumption scrambling and hiding effect. A solution in which a scrambling module is used to perform scrambling can be easily implemented. If a power consumption fluctuation range of the scrambling module is large, and an average value and a peak value of the power consumption are large, the power consumption scrambling and hiding effect is better. Typically, the scrambling module may be a clock scrambling module, a TRNG, an OTP, a sensor, an MED, a hash calculation module, a module inside an SCE\PKE, or the like.

In another aspect, according to this embodiment of the present invention, a current situation in which a power consumption attack prevention algorithm always lags behind a new power consumption attack algorithm can be avoided. A new attack algorithm can be defended against in time and effectively. A side channel attack method needs to depend on power consumption or electromagnetic information leaked during normal operation of a module. However, in this method, power consumption of a module during normal operation is hidden, and a precondition for a successful side channel attack is eliminated. Therefore, this works in any side channel attack method, and can defend against ever-changing side channel attack algorithms.

In still another aspect, in this embodiment of the present invention, power consumption scrambling is performed only when the cipher engine operates, so that power consumption of the entire chip is not excessively high during a long period of time. In an application scenario that is relatively sensitive to power consumption, after the cipher engine normally operates, the power consumption scrambling module may be disabled in time. In this way, security is improved, and power consumption of the entire chip or this device is not excessively high during a long period of time.

In this embodiment of the present invention, a currently idle module, a redundancy module, or redundancy logic in a chip or a product is used. When the method is used, power consumption of the chip or the product suddenly increases before a cipher engine of the chip normally runs. The idle module, the redundancy module, or the redundancy logic in the product is used. When the method is used, power consumption suddenly increases when the cipher engine of the chip normally runs. After the engine normally runs, all or a part of the power consumption scrambling module may be disabled by means of software configuration, so as to reduce power consumption. In this case, the power consumption of the chip suddenly slumps or slightly reduces accordingly. Therefore, in this embodiment of the present invention, the scrambling module runs during a whole process of performing encryption/decryption calculation, signature authentication, and key generation by the cipher engine, so as to effectively defend against a side channel attack.

It should be noted that, for brief description, each of foregoing method embodiments is described as a combination of a series of actions. However, persons skilled in the art should appreciate that the present invention is not limited to the described order of the actions, because according to the present invention, some steps may be performed in another order or simultaneously. In addition, persons skilled in the art should also appreciate that all the embodiments described in the specification are examplary embodiments, and the related actions and modules are not necessarily mandatory to the present invention.

To better implement the foregoing solutions in this embodiment of the present invention, the following further provides a related apparatus used to implement the foregoing solutions.

Referring to FIG. 4, an attack prevention apparatus 400 for a cipher engine provided in an embodiment of the present invention may include an obtaining module 401, a condition configuration module 402, and a control module 403.

The obtaining module 401 is configured to obtain a first running start condition configured for a cipher engine, where the cipher engine is disposed on a chip.

The condition configuration module 402 is configured to configure, according to the first running start condition, a second running start condition for a scrambling module disposed on the chip, where the second running start condition is used to enable the scrambling module to enter an operating state of generating power consumption and an electromagnetic wave in a process of starting, according to the first running start condition, the cipher engine to perform data encryption/decryption processing.

The control module 403 is configured to: control the scrambling module to start to run when the second running start condition is met, where the scrambling module generates the power consumption and the electromagnetic wave during running; and control the cipher engine to start when the first running start condition is met, so that the cipher engine starts to perform data encryption/decryption processing.

In some embodiments of the present invention, the first running start condition includes a first running start time; and
the condition configuration module 402 is specifically configured to obtain, according to the first running start time of the cipher engine and a preset start time interval, a second running start time of the scrambling module disposed on the chip.

In some embodiments of the present invention, the condition configuration module 402 is specifically a first time configuration unit, or a second time configuration unit, or a third time configuration unit, where
the first time configuration unit is configured to: when a value of the start time interval is a time value less than 0, use a time value that is obtained by advancing the first running start time by the start time interval as the second running start time; or
the second time configuration unit is configured to: when a value of the start time interval is a time value greater than 0, use a time value that is obtained by delaying the first running start time by the start time interval as the second running start time; or
the third time configuration unit is configured to: when a value of the start time interval is 0, use the first running start time as the second running start time.

In some embodiments of the present invention, the control module 403 is specifically a first module triggering unit, or a second module triggering unit, or a third module triggering unit, where
the first module triggering unit is specifically configured to control the scrambling module disposed on the chip to start to run before the cipher engine starts data encryption/decryption processing; or
the second module triggering unit is specifically configured to control the scrambling module disposed on the chip to start to run in a process of performing data encryption/decryption processing by the cipher engine; or
the third module triggering unit is specifically configured to control the scrambling module disposed on the chip to start to run when the cipher engine starts data encryption/decryption processing.

In some embodiments of the present invention, the control module 403 is further configured to: after controlling the cipher engine to start when the first running start condition is met, control the scrambling module to stop running after the cipher engine completes data encryption/decryption processing.

In some embodiments of the present invention, the control module 403 is further configured to: after controlling the cipher engine to start when the first running start condition is met, control the scrambling module to stop running or control the scrambling module to reduce power consumption when a disabling time interval after the cipher engine starts to perform data encryption/decryption processing expires.

In some embodiments of the present invention, the scrambling module includes an idle module that is disposed on the chip and that is in an idle state in the process of performing data encryption/decryption processing by the cipher engine, or a redundancy module disposed on the chip, or an idle logic unit or a redundancy logic unit that is inside the cipher engine in the process of performing data encryption/decryption processing by the cipher engine.

It can be learned from the example used for description in the foregoing embodiment of the present invention that, a cipher engine and a scrambling module are disposed on a chip. A first running start condition configured for the cipher engine is first obtained, and then a second running start condition may be configured, according to the first running start condition, for the scrambling module disposed on the chip. The second running start condition is used to enable the scrambling module to enter an operating state of generating power consumption and an electromagnetic wave in a process of starting, according to the first running start condition, the cipher engine to perform data encryption/decryption processing. The scrambling module is controlled to start to run when the second running start condition is met, where the scrambling module generates the power consumption and the electromagnetic wave during running; and the cipher engine is controlled to start when the first running start condition is met, so that the cipher engine starts to perform data encryption/decryption processing. Therefore, the scrambling module in this embodiment of the present invention can generate power consumption and an electromagnetic wave in the process of performing data encryption/decryption processing by the cipher engine, so that the scrambling module can mask power consumption and an electromagnetic wave generated by the cipher engine inside the chip. In this way, the cipher engine inside the chip cannot be correctly located during a side channel attack, and a possibility that the chip is attacked by using a side channel is eliminated, so as to prevent a side channel attack on the chip, and improve security of the chip.

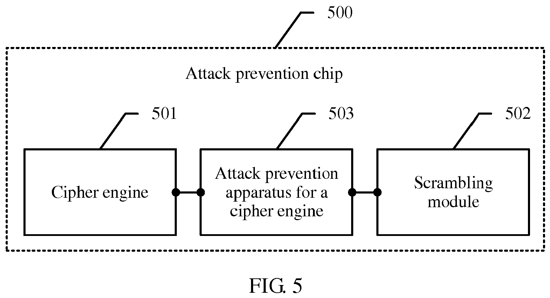

Referring to FIG. 5, an embodiment of the present invention provides an attack prevention chip 500. The chip includes a cipher engine 501, a scrambling module 502, and an attack prevention apparatus 503 for a cipher engine. The cipher engine 501 and the scrambling module 502 respectively establish a communications connection to the attack prevention apparatus 503 for a cipher engine, and the attack prevention apparatus 503 for a cipher engine is the apparatus shown in FIG. 4.

It should be noted that content such as information exchange between the modules/units of the apparatus and the execution processes thereof is based on the same idea as the method embodiments of the present invention, and produces the same technical effects as the method embodiments of the present invention. For the specific content, reference may be made to the foregoing description in the method embodiments of the present invention, and the details are not described herein again.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. In addition, in the accompanying drawings of the apparatus embodiments provided by the present invention, connection relationships between modules indicate that the modules have communication connections with each other, which may be specifically implemented as one or more communications buses or signal cables. Persons of ordinary skill in the art may understand and implement the embodiments of the present invention without creative efforts.

Based on the description of the foregoing implementations, persons skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. In addition, a specific hardware structure used to achieve a same function may be in multiple forms, for example, in a form of an analog circuit, a digital circuit, a dedicated circuit, or the like. However, as for the present invention, software program implementation is a better implementation in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, and the like) to perform the methods described in the embodiments of the present invention.

In conclusion, the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. An attack prevention method for a cipher engine, comprising:
obtaining, by an attack prevention apparatus, a first running start condition (101) configured for the cipher engine, wherein the attack prevention apparatus and the cipher engine are disposed on a chip;
configuring, by the attack prevention apparatus, according to the first running start condition, a second running start condition (102) for a scrambling module disposed on the chip, wherein the second running start condition is used to enable the scrambling module to enter an operating state;
controlling, by the attack prevention apparatus, the scrambling module (103) to enter the operating state when the second running start condition is met, wherein the scrambling module generates power consumption and an electromagnetic wave during the operating state;
controlling, by the attack prevention apparatus, the cipher engine (104) to perform data encryption/decryption processing when the first running start condition is met;
wherein the cipher engine generates power consumption and electromagnetic wave in the process of performing data encryption/decryption that are scrambled by the power consumption and the electromagnetic wave generated by the scrambling module during the operation state;
**characterized in that** the scrambling module is an idle module that has been disposed on the chip,
wherein when the cipher engine operates, the idle module scrambles the power consumption and the electromagnetic wave;
and when the cipher engine does not operate, the idle module operates as a True Random Number Generator module or a one time programmer or a memory encryption and decryption module or a sensor or a hash calculation module.

2. The method according to claim 1, wherein the first running start condition comprises: a first running start time; and
the configuring, according to the first running start condition, a second running start condition (102) for a scrambling module disposed on the chip comprises:
obtaining, according to the first running start time of the cipher engine and a preset start time interval, a second running start time of the scrambling module disposed on the chip.

3. The method according to claim 2, wherein the obtaining, according to the running start time of the cipher engine and a preset start time interval, a running start time of the scrambling module disposed on the chip comprises:
when a value of the start time interval is a time value less than 0, using a time value that is obtained by advancing the first running start time by the start time interval as the second running start time; or
when a value of the start time interval is a time value greater than 0, using a time value that is obtained by delaying the first running start time by the start time interval as the second running start time; or
when a value of the start time interval is 0, using the first running start time as the second running start time.

4. The method according to claim 3, wherein the controlling the scrambling module (103) to start to run when the second running start condition is met comprises:
controlling the scrambling module disposed on the chip to start to run before the cipher engine starts data encryption/decryption processing; or
controlling the scrambling module disposed on the chip to start to run in a process of performing data encryption/decryption processing by the cipher engine; or
controlling the scrambling module disposed on the chip to start to run when the cipher engine starts data encryption/decryption processing.

5. The method according to any one of claims 1 to 4, wherein after the controlling the cipher engine (104) to start when the first running start condition is met, the method further comprises:
controlling the scrambling module to stop running after the cipher engine completes data encryption/decryption processing.

6. The method according to any one of claims 1 to 4, wherein after the controlling the cipher engine (104) to start when the first running start condition is met, the method further comprises:
controlling the scrambling module to stop running or controlling the scrambling module to reduce power consumption when a disabling time interval after the cipher engine starts to perform data encryption/decryption processing expires.

7. The method according to any one of claims 1 to 4, wherein the scrambling module further comprises a redundancy module that is disposed on the chip and that performs power consumption scrambling and electromagnetic wave scrambling on the cipher engine, or an idle logic unit or a redundancy logic unit that is inside the cipher engine in the process of performing data encryption/decryption processing by the cipher engine.

8. An attack prevention chip (500), wherein the chip comprises a cipher engine (501), a scrambling module (502), and an attack prevention apparatus for the cipher engine (503), and the cipher engine (501) and the scrambling module (502) respectively establish a communications connection to the attack prevention apparatus for the cipher engine (503) wherein the cipher engine (501), the scrambling module (502) and the apparatus for the cipher engine (503) are configured to execute the method according to any of claims 1 to 7.

## Patentansprüche

1. Angriffsverhinderungsverfahren für eine Verschlüsselungs-Engine, das Folgendes umfasst:
Erhalten durch eine Angriffsverhinderungseinrichtung einer ersten Ablaufstartbedingung (101), die für die Verschlüsselungs-Engine konfiguriert ist, wobei die Angriffsverhinderungseinrichtung und die Verschlüsselungs-Engine auf einem Chip angeordnet sind;
Konfigurieren durch die Angriffsverhinderungseinrichtung gemäß der ersten Ablaufstartbedingung einer zweiten Ablaufstartbedingung (102) für ein Verwürfelungsmodul, das auf dem Chip angeordnet ist, wobei die zweite Ablaufstartbedingung verwendet wird, um das Verwürfelungsmodul zu aktivieren, in einen Betriebszustand einzutreten;
Steuern durch die Angriffsverhinderungseinrichtung des Verwürfelungsmoduls (103), in den Betriebszustand einzutreten, wenn die zweite Ablaufstartbedingung erfüllt ist, wobei das Verwürfelungsmodul Energieverbrauch und eine elektromagnetische Welle während des Betriebszustands erzeugt;
Steuern durch die Angriffsverhinderungseinrichtung der Verschlüsselungs-Engine (104), Datenverschlüsselungs-/Datenentschlüsselungsverarbeitung auszuführen, wenn die erste Ablaufstartbedingung erfüllt ist;
wobei die Verschlüsselungs-Engine Energieverbrauch und elektromagnetische Welle in dem Prozess zum Ausführen von Datenverschlüsselung/Datenentschlüsselung erzeugt, die durch den Energieverbrauch und die elektromagnetische Welle, die durch das Verwürfelungsmodul während des Betriebszustands erzeugt werden, verwürfelt sind;
**dadurch gekennzeichnet, dass** das Verwürfelungsmodul ein ungenutztes Modul ist, das auf dem Chip angeordnet worden ist,
wobei dann, wenn die Verschlüsselungs-Engine arbeitet, das ungenutzte Modul den Energieverbrauch und die elektromagnetische Welle verwürfelt;
und wenn die Verschlüsselungs-Engine nicht arbeitet, das ungenutzte Modul als ein echtes Zufallszahlengeneratormodul oder als eine Einmalprogrammiereinheit oder ein Speicherverschlüsselungs- und -entschlüsselungsmodul oder ein Sensor oder ein "Hash"-Berechnungsmodul arbeitet.

2. Verfahren nach Anspruch 1, wobei die erste Ablaufstartbedingung Folgendes umfasst: eine erste Ablaufstartzeit; und
das Konfigurieren gemäß der ersten Ablaufstartbedingung einer zweiten Ablaufstartbedingung (102) für ein Verwürfelungsmodul, das auf dem Chip angeordnet ist, Folgendes umfasst:
Erhalten gemäß der ersten Ablaufstartzeit der Verschlüsselungs-Engine und einer im Voraus eingestellten Startzeitspanne einer zweiten Ablaufstartzeit des Verwürfelungsmoduls, das auf dem Chip angeordnet ist.

3. Verfahren nach Anspruch 2, wobei das Erhalten gemäß der Ablaufstartzeit der Verschlüsselungs-Engine und einer im Voraus eingestellten Startzeitspanne einer Ablaufstartzeit des Verwürfelungsmoduls, das auf dem Chip angeordnet ist, Folgendes umfasst:
wenn ein Wert der Startzeitspanne ein Zeitwert kleiner als 0 ist, Verwenden eines Zeitwerts, der durch Fortschreiten der ersten Ablaufstartzeit um die Startzeitspanne erhalten wird, als die zweite Ablaufstartzeit; oder
wenn ein Wert der Startzeitspanne ein Zeitwert größer als 0 ist, Verwenden eines Zeitwerts, der durch Verzögern der ersten Ablaufstartzeit um die Startzeitspanne erhalten wird, als die zweite Ablaufstartzeit; oder
wenn ein Wert der Startzeitspanne gleich 0 ist, Verwenden der ersten Ablaufstartzeit als die zweite Ablaufstartzeit.

4. Verfahren nach Anspruch 3, wobei das Steuern des Verwürfelungsmoduls (103), den Ablauf zu starten, wenn die zweite Ablaufstartbedingung erfüllt ist, Folgendes umfasst:
Steuern des Verwürfelungsmoduls, das auf dem Chip angeordnet ist, den Ablauf zu starten, bevor die Verschlüsselungs-Engine die Datenverschlüsselungs-/Datenentschlüsselungsverarbeitung startet; oder
Steuern des Verwürfelungsmoduls, das auf dem Chip angeordnet ist, den Ablauf in einem Prozess zum Ausführen von Datenverschlüsselungs-/Datenentschlüsselungsverarbeitung durch die Verschlüsselungs-Engine zu starten; oder
Steuern des Verwürfelungsmoduls, das auf dem Chip angeordnet ist, den Ablauf zu starten, wenn die Verschlüsselungs-Engine die Datenverschlüsselungs-/Datenentschlüsselungsverarbeitung startet.

5. Verfahren nach einem der Ansprüche 1 bis 4, wobei das Verfahren nach dem Steuern, dass die Verschlüsselungs-Engine (104) startet, wenn die erste Ablaufstartbedingung erfüllt ist, ferner Folgendes umfasst:
Steuern des Verwürfelungsmoduls, den Ablauf anzuhalten, nachdem die Verschlüsselungs-Engine die Datenverschlüsselungs-/Datenentschlüsselungsverarbeitung fertiggestellt hat.

6. Verfahren nach einem der Ansprüche 1 bis 4, wobei das Verfahren nach dem Steuern, dass die Verschlüsselungs-Engine (104) startet, wenn die erste Ablaufstartbedingung erfüllt ist, ferner Folgendes umfasst:
Steuern des Verwürfelungsmoduls, den Ablauf anzuhalten, oder Steuern des Verwürfelungsmoduls, den Energieverbrauch zu reduzieren, wenn eine Deaktivierungszeitspanne, nachdem die Verschlüsselungs-Engine das Ausführen der Datenverschlüsselungs-/Datenentschlüsselungsverarbeitung startet, abläuft.

7. Verfahren nach einem der Ansprüche 1 bis 4, wobei das Verwürfelungsmodul ferner ein Redundanzmodul, das auf dem Chip angeordnet ist und das Verwürfelung des Energieverbrauchs und Verwürfelung der elektromagnetischen Welle auf der Verschlüsselungs-Engine ausführt, oder eine ungenutzte Logikeinheit oder eine Redundanz-Logikeinheit, die innerhalb der Verschlüsselungs-Engine in dem Prozess zum Ausführen von Datenverschlüsselungs-/Datenentschlüsselungsverarbeitung durch die Verschlüsselungs-Engine ist, umfasst.

8. Angriffsverhinderungs-Chip (500), wobei der Chip eine Verschlüsselungs-Engine (501), ein Verwürfelungsmodul (502) und eine Angriffsverhinderungseinrichtung für die Verschlüsselungs-Engine (503) umfasst und die Verschlüsselungs-Engine (501) und das Verwürfelungsmodul (502) jeweils eine Kommunikationsverbindung mit der Angriffsverhinderungseinrichtung für die Verschlüsselungs-Engine (503) aufbauen, wobei die Verschlüsselungs-Engine (501), das Verwürfelungsmodul (502) und die Einrichtung für die Verschlüsselungs-Engine (503) konfiguriert sind, das Verfahren nach einem der Ansprüche 1 bis 7 auszuführen.

## Revendications

1. Procédé de prévention d'attaques pour un cryptomoteur, comprenant :
l'obtention, par un appareil de prévention d'attaques, d'une première condition de démarrage de fonctionnement (101) configurée pour le cryptomoteur, l'appareil de prévention d'attaques et le cryptomoteur étant disposés sur une puce ;
la configuration, par l'appareil de prévention d'attaques, en fonction de la première condition de démarrage de fonctionnement, d'une seconde condition de démarrage de fonctionnement (102) pour un module de brouillage disposé sur la puce, la seconde condition de démarrage de fonctionnement servant à placer le module de brouillage dans un état de fonctionnement ;
la commande, par l'appareil de prévention d'attaques, du placement du module de brouillage (103) dans l'état de fonctionnement quand la seconde condition de démarrage de fonctionnement est satisfaite, le module de brouillage générant une consommation d'énergie et une onde électromagnétique durant l'état de fonctionnement ;
la commande, par l'appareil de prévention d'attaques, du cryptomoteur (104) pour réaliser un traitement de cryptage/décryptage de données quand la première condition de démarrage de fonctionnement est satisfaite ;
dans lequel le cryptomoteur génère une consommation d'énergie et une onde électromagnétique dans le processus de réalisation d'un cryptage/décryptage de données qui sont brouillées par la consommation d'énergie et l'onde magnétique générées par le module de brouillage durant l'état de fonctionnement ;
**caractérisé en ce que** le module de brouillage est un module inactif qui a été disposé sur la puce,
dans lequel quand le cryptomoteur fonctionne, le module inactif brouille la consommation d'énergie et l'onde électromagnétique ;
et quand le cryptomoteur ne fonctionne pas, le module inactif fonctionne en tant que module générateur de nombres aléatoires vrais ou programmateur unique ou module de cryptage et décryptage de mémoire ou capteur ou module de calcul de valeurs de hachage.

2. Procédé selon la revendication 1, dans lequel la première condition de démarrage de fonctionnement comprend : un premier temps de démarrage de fonctionnement ; et la configuration, en fonction de la première condition de démarrage de fonctionnement, d'une seconde condition de démarrage de fonctionnement (102) pour un module de brouillage disposé sur la puce comprend :
l'obtention, en fonction du premier temps de démarrage de fonctionnement du cryptomoteur et d'un intervalle de temps de démarrage prédéfini, d'un second temps de démarrage de fonctionnement du module de brouillage disposé sur la puce.

3. Procédé selon la revendication 2, dans lequel l'obtention, en fonction du temps de démarrage de fonctionnement du cryptomoteur et d'un intervalle de temps de démarrage prédéfini, d'un temps de démarrage de fonctionnement du module de brouillage disposé sur la puce comprend :
quand une valeur de l'intervalle de temps de démarrage est une valeur de temps inférieure à 0, l'utilisation d'une valeur de temps qui est obtenue en avançant le premier temps de démarrage de fonctionnement par l'intervalle de temps de démarrage comme second temps de démarrage de fonctionnement ; ou
quand une valeur de l'intervalle de temps de démarrage est une valeur de temps supérieure à 0, l'utilisation d'une valeur de temps qui est obtenue en retardant le premier temps de démarrage de fonctionnement par l'intervalle de temps de démarrage comme second temps de démarrage de fonctionnement ; ou
quand une valeur de l'intervalle de temps de démarrage est 0, l'utilisation du premier temps de démarrage de fonctionnement comme second temps de démarrage de fonctionnement.

4. Procédé selon la revendication 3, dans lequel la commande du démarrage du fonctionnement du module de brouillage (103) quand la seconde condition de démarrage de fonctionnement est satisfaite comprend :
la commande du démarrage du fonctionnement du module de brouillage disposé sur la puce avant que le cryptomoteur ne démarre un processus de cryptage/décryptage de données ; ou
la commande du démarrage du fonctionnement du module de brouillage disposé sur la puce dans un processus de réalisation d'un traitement de cryptage/décryptage de données par le cryptomoteur ; ou
la commande du démarrage du fonctionnement du module de brouillage disposé sur la puce quand le cryptomoteur démarre un traitement de cryptage/décryptage de données.

5. Procédé selon l'une quelconque des revendications 1 à 4, comprenant en outre, après la commande du démarrage du cryptomoteur (104) quand la première condition de démarrage de fonctionnement est satisfaite :
la commande de l'arrêt du fonctionnement du module de brouillage après que le cryptomoteur a achevé un traitement de cryptage/décryptage de données.

6. Procédé selon l'une quelconque des revendications 1 à 4, le procédé comprenant en outre, après la commande du démarrage du cryptomoteur (104) quand la première condition de démarrage de fonctionnement est satisfaite :
la commande de l'arrêt du fonctionnement du module de brouillage ou la commande d'une réduction de consommation d'énergie du module de brouillage quand un intervalle de temps de désactivation après que le le cryptomoteur a commencé à réaliser un traitement de cryptage/décryptage de données arrive à expiration.

7. Procédé selon l'une quelconque des revendications 1 à 4, dans lequel le module de brouillage comprend en outre un module de redondance qui est disposé sur la puce et qui réalise un brouillage de consommation d'énergie et un brouillage d'onde électromagnétique sur le cryptomoteur, ou une unité logique inactive ou une unité logique de redondance qui est située à l'intérieur du cryptomoteur dans le processus de réalisation d'un traitement de cryptage/décryptage de données par le cryptomoteur.

8. Puce de prévention d'attaques (500), la puce comprenant un cryptomoteur (501), un module de brouillage (502), et un appareil de prévention d'attaques pour cryptomoteur (503), et le cryptomoteur (501) et le module de brouillage (502) établissant respectivement une connexion de communication avec l'appareil de prévention d'attaques pour cryptomoteur (503) ; le cryptomoteur (501), le module de brouillage (502) et l'appareil pour cryptomoteur (503) étant configurés pour exécuter le procédé selon l'une quelconque des revendications 1 à 7.
